# EUROPÄISCHE PATENTANMELDUNG

(11) **EP 1 736 742 A2**
(43) Veröffentlichungstag der Anmeldung: **27.12.2006**
(21) Anmeldenummer: 06012561.4
(22) Anmeldetag: 19.06.2006
(51) Int. Cl.: G01F 15/18

(54) **Füllstands- oder Drucksensor mit antiadhäsiver Schicht**

(30) Priorität: 20.06.2005 DE 102005028395; 20.06.2005 US 692089 P
(71) Anmelder: VEGA Grieshaber KG, 77709 Wolfach (DE)
(72) Erfinder: Jacob, Jörn, 77709 Kirnbach (DE); Motzer, Jürgen, 77723 Gengenbach (DE); Deck, Thomas, 77709 Wolfach (DE); Fehrenbach, Josef, 77716 Haslach (DE)
(74) Vertreter: Kopf, Korbinian Paul

(57) **Zusammenfassung**

Die vorliegende Erfindung betrifft ein Bauteil (2) für ein Füllstandmessgerät oder für ein Druckmessgerät, wobei das Bauteil (2) eine Beschichtung (1) mit einer mikroglatten Oberfläche (4) aufweist, so dass die mikroglatte Oberfläche (4) von Ablagerungen im Wesentlichen frei bleibt.

## Beschreibung

### Technisches Gebiet

Die vorliegende Erfindung betrifft ein Bauteil, eine Vorrichtung zum Füllstandsmessen oder Druckmessen, ein Verfahren zum Beschichten des Bauteils, und eine Verwendung eines Bauteils in einem Füllstandsmessgerät oder in einem Druckmessgerät.

### Hintergrund der Erfindung

In vielen Industriebereichen werden häufig Bauteile erheblichen Verschmutzungen und Verunreinigungen ausgesetzt, die an deren Oberfläche haften bleiben. Jedoch ist es mühsam, wegen der teils schwierigen Erreichbarkeit und der gefährlichen Einsatzbereiche, diese Teile manuell zu säubern. Daher wird versucht, Oberflächen zu schaffen, die selbstreinigende Effekte aufweisen können.

Besonders im Bereich der Messtechnik, bei der die eingesetzten Geräte rauen Industriebedingungen ausgesetzt werden und somit oft erheblich verschmutzt sind, kann der Schmutz die Messeigenschaften erheblich einschränken. Bei Verschmutzungen kann es sich sowohl um Feststoffe (wie z.B. Stäube) als auch um Flüssigkeiten, wie beispielsweise Kondensate, handeln. Je nach Verschmutzungsbedingungen kann sich im Laufe der Zeit am Messgerät ein erheblicher Verschmutzungsgrad einstellen, so dass die Messfunktionen beeinträchtigt werden oder sogar eine Funktion unmöglich machen.

In der US 6,435,025 B1 und in der WO 02/14804 A1 werden Beschichtungen vorgeschlagen, welche auf dem sogenannten Lotuseffekt basieren. Bei dieser Technik weist die Oberfläche jeweils eine definierte Mikrostruktur mit Erhöhungen und Vertiefungen mit Strukturdimensionen im Bereich zwischen 5 µm und 200 µm auf. Die Mikrostruktur und ihr niederenergetische bzw. hydrophobe Charakter hat die Eigenschaft, dass Wasser an der Oberfläche abläuft. Gleichzeitig werden auf der Oberfläche befindliche Schmutzpartikel von dem ablaufenden Wasser mitgerissen.

Eine weitere Möglichkeit sind Beschichtungen aus niederenergetischen Kunststoffen, wie beispielsweise PTFE oder PVDF. Solche Schichten haben in der Regel Dicken von mindestens 1 mm, um eine ausreichende Dichtigkeit zu gewährleisten. Diese Schichten sind nicht transparent und können bedingt durch die Dicke ebenfalls einen großen Einfluss auf die Messcharakteristik eines Messgerätes haben.

### Darstellung der Erfindung

Es ist eine Aufgabe der Erfindung, eine Oberfläche zu schaffen, die schmutzabweisend wirken kann.

Diese Aufgabe wird durch ein Bauteil, durch ein Herstellungsverfahren, durch eine Füllstands- und Druckmessvorrichtung und durch eine Verwendung des Bauteils in einem Füllstandsmessgerät oder einem Druckmessgerät mit den Merkmalen gemäß den unabhängigen Ansprüchen gelöst.

Gemäß einem exemplarischen Ausführungsbeispiel der Erfindung ist ein Bauteil für ein Füllstandsmessgerät oder ein Druckmessgerät geschaffen, wobei das Bauteil eine Beschichtung mit einer mikroglatten Oberfläche aufweist, so dass die mikroglatte Oberfläche von Ablagerungen im Wesentlichen frei bleibt.

Gemäß einem weiteren exemplarischen Ausführungsbeispiel der Erfindung ist ein Verfahren zur Herstellung eines Bauteils für ein Füllstandmessgerät oder für ein Druckmessgerät geschaffen, wobei bei dem Verfahren eine Beschichtung mit einer mikroglatten Oberfläche auf dem Bauteil gebildet wird, so dass die mikroglatte Oberfläche von Ablagerungen im Wesentlichen frei bleibt.

Gemäß einem weiteren exemplarischen Ausführungsbeispiel der Erfindung ist eine Vorrichtung zum Füllstandsmessen oder zum Druckmessen geschaffen, die ein Bauteil mit den oben beschriebenen Merkmalen umfasst.

Gemäß einem weiteren exemplarischen Ausführungsbeispiel der Erfindung wird ein Bauteil mit den oben beschriebenen Merkmalen in einem Füllstandsmessgerät, einem Radarfüllstandsmessgerät oder in einem Druckmessgerät verwendet.
Unter dem Begriff "mikroglatt" kann im Rahmen dieser Anmeldung insbesondere eine Eigenschaft einer Oberfläche verstanden werden, die im Mittel keine Oberflächenrauhigkeiten aufweist, deren Strukturdimensionen den Mikrometerbereich überschreiten. Insbesondere können Oberflächenstrukturen einer "mikroglatten" Oberflächen nach diesem Verständnis höchstens mittlere Dimensionen unterhalb eines Mikrometers aufweisen. "Mikroglatte" Oberflächen können eine solch geringe Oberflächenrauhigkeit aufweisen, dass Oberflächenunreinheiten allenfalls unter einem Mikroskop mit einer mindestens in Mikrometerbereich liegenden Auflösung sichtbar werden können. Unter dem Begriff "mikroglatt" kann im Rahmen dieser Anmeldung ferner insbesondere eine Eigenschaft einer Oberfläche verstanden werden, die eine Oberflächenrauhigkeit von kleiner oder gleich Ra = 1,2 µm, bevorzugt von kleiner oder gleich Ra = 0.8 µm oder weiter vorzugsweise unter Ra = 0,6 µm oder weiter vorzugsweise unter Ra = 0,1 µm aufweist. Eine weitere Verfeinerung der Glattheit einer mikroglatten Oberfläche kann zu einer "nanoglatten" Oberfläche führen, die erfindungsgemäß anstelle einer mikroglatten Oberfläche zum Einsatz kommen kann.

Eine Idee der Erfindung kann darin gesehen werden, die Oberflächengüte zum Erreichen antiadhäsiver Eigenschaften gerade zu verbessern bzw. zu verfeinern. Insofern verfolgt die Erfindung gerade einen zu der Stoßrichtung von US 6,435,025 B1 und WO 02/14804 A1 entgegengesetzten Ansatz, da erfindungsgemäß keine definierte Bildung von Mikrostrukturen angestrebt wird, sondern das Bilden einer möglichst glatten Oberfläche.

Eine mikroglatte Oberfläche kann nicht nur Wasser abweisen, sondern kann im Gegensatz zu den Beschichtungen gemäß US 6,435,025 B1 und WO 02/14804 A1 Schmutz selbst in der Abwesenheit von Wasser abweisen, da die mikroglatte Beschichtung zumindest die Gefahr vermindert, dass sich in Oberflächenstrukturen Schmutz verfängt anstatt abgewiesen zu werden.

Um das Ziel einer unbenetzbaren und selbstreinigenden Oberfläche zu erreichen, sind verschiedene Oberflächeneigenschaften vorteilhaft. Zu den wichtigsten Eigenschaften, die eine solche schmutzabweisende Oberfläche aufweisen sollte, gehört vor allem der

Kontaktwinkel eines Mediums auf einer Oberfläche. Der Kontaktwinkel gibt insbesondere an, welchen Winkel ein Flüssigkeitstropfen auf der Oberfläche eines Feststoffs zu dieser Oberfläche bildet. Je größer der Kontaktwinkel einer Flüssigkeit bzw. eines Flüssigkeitstropfens mit einer Oberfläche ist, desto weniger Auflagefläche hat der Flüssigkeitstropfen auf der Oberfläche. Je geringer nun die Auflagefläche bzw. je größer der Kontaktwinkel, desto leichter perlt ein Flüssigkeitstropfen von der Oberfläche ab.

Es wird angenommen, dass die Größe des Kontaktwinkels zwischen einer Flüssigkeit und der Oberfläche insbesondere von der molekularen Wechselwirkung zwischen diesen beiden abhängt. Je geringer diese Wechselwirkung ist, desto größer wird der Kontaktwinkel.

Da die Oberflächenenergie eines Werkstoffs spezifisch ist, kann durch geeignete Wahl der Oberflächenmaterialien eine möglichst energiearme Oberfläche geschaffen werden, um damit den Kontaktwinkel und somit die Unbenetzbarkeit und Selbstreinigung eines Bauteils zu erhöhen. Der Kontaktwinkel kann, um die Unbenetzbarkeit und die Selbstreinigung zu erreichen, insbesondere mindestens 80° Grad, zwischen 80° und 160°, oder bevorzugt zwischen 90° und 120° aufweisen.

Im Gegensatz zu dem Lotuseffekt, bei dem die Auflagefläche von Flüssigkeitstropfen durch eine Mikrostruktur verringert wird, besteht ein wesentlicher Vorteil der Erfindung darin, dass eine äußerst glatte Oberfläche, d.h. mit einer Rauhigkeit von zum Beispiel unter Ra = 1,2 µm, vorzugsweise unter Ra = 0,8 µm oder weiter vorzugsweise unter Ra = 0,6 µm oder weiter vorzugsweise unter Ra = 0,1 µm geschaffen wird, um somit mechanisch stabile Schichten mit guter Abrasionsfestigkeit zu schaffen. Da beim Lotuseffekt die Oberfläche durch Erhebungen und Vertiefungen in der Struktur äußerst rau ausgebildet sind, sind diese Mikrostrukturen mechanisch sehr empfindlich. Schon bei geringer mechanischer Belastung wird die winzige Struktur zerstört und die Funktion des Lotuseffekts ausgeschaltet. Außerdem können sich ohne die Anwesenheit von Wasser bevorzugt Feststoffe, wie Stäube, in der rauen strukturierten Oberfläche festsetzen. Bei der glatten Oberfläche der vorliegenden Erfindung

ist dies nicht oder nur in verringertem Maße möglich. Durch die Ausbildung einer äußerst glatten Oberfläche können ebenfalls völlig transparente Schichten hergestellt werden, die durch die Rauhigkeit beim Lotuseffekt ebenfalls nicht möglich oder äußerst schwierig sind, da die Mikrostrukturen Lichtbrechungen verursachen.

Die Aufbringung der erfindungsgemäßen glatten Beschichtung ist gegenüber Kunststoffschichten ebenfalls vorteilhaft, da diese Kunststoffschichten ebenfalls weich und weniger abrasionsfest sind.

Mit der vorliegenden Erfindung ist es nun möglich, die Oberfläche, beispielsweise von Messgeräten und insbesondere der medienberührenden Teile des Messgeräts, dauerhaft antiadhäsiv auszustatten, ohne andere Eigenschaften des Messgeräts negativ zu beeinflussen. Durch die transparente Beschichtung beeinträchtigt die erfindungsgemäße Beschichtung das Design von Endprodukten für den Verbraucher keineswegs. Vorteilhaft ist außerdem die hohe mechanische Belastbarkeit der Beschichtung.

Ebenfalls ist das Herstellungsverfahren für eine Beschichtung mit dem Lotuseffekt äußerst aufwendig, besonders bei nicht planaren Strukturen, da die aufzutragende Mikrostruktur sehr schwierig herstellbar ist. Da das Herstellverfahren von mikroglatten Oberflächen gemäß der vorliegenden Erfindung viel einfacher und effektiver durchführbar ist, können die Herstellkosten drastisch verringert werden.

Die Güte oder Topologie technischer Oberflächen kann insbesondere durch die Begriffe "Welligkeit" (zum Bezeichnen größerer Abweichungen) und "Rauheit" (zum Bezeichnen kleinerer Unregelmäßigkeiten) gekennzeichnet werden. Der Mittenrauhwert Ra ist in DIN 4768 genannt und kann insbesondere folgendermaßen definiert werden: der Mittenrauhwert Ra ist der arithmetische Mittelwert aller Abstände des Profils von der Mittellinie. Bei der erfindungsgemäßen Beschichtung kann Ra kleiner oder gleich 1,2 µm sein, vorzugsweise kleiner oder gleich 1 µm, weiter vorzugsweise kleiner oder gleich 0,8 µm oder weiter vorzugsweise kleiner oder gleich 0,1 µm.

Da die erfindungsgemäße Beschichtung aus anorganischen Werkstoffen hergestellt werden kann, sind Einsatzbereiche von bis zu 600° C Grad und mehr möglich.

Gemäß einem weiteren exemplarischen Ausführungsbeispiel des Bauteils umfasst die Oberfläche des Bauteils eine Beschichtung aus einem Gradientenmaterial. Unter "Gradientenmaterialien" kann dabei insbesondere ein Material verstanden werden, das in sich zwei oder mehr Stoffkonzentrationen ausprägt, die unterschiedliche chemische und mechanische Eigenschaften aufweisen. Beispielsweise können diese Schichten planar nebeneinander, in einer Matrixbauweise, oder chaotisch verteilt sein. Im Einsatz von Gradientenmaterialien auf der Oberfläche eines Bauteils ist es beispielsweise möglich, eine an das Bauteil angrenzende Haftschicht mit guter Abrasionsfestigkeit und gleichzeitig eine niederenergetische Oberfläche mit guten Antiadhäsionseigenschaften zu schaffen.

In einem weiteren Ausführungsbeispiel der vorliegenden Erfindung weist die Beschichtung eine selbstorganisierte Oberflächenschicht auf. Selbstorganisierte Oberflächenschichten zeichnen sich dadurch aus, dass sie als einheitliches Gemisch aufgetragen werden können und sich selbst in definierter Art und Weise ausrichten. Dies bedeutet, dass die Beschichtung als Ganzes aufgetragen werden kann und sich somit beispielsweise verschiedenartige definierte Schichten bzw. verschiedene Konzentrationen eines Stoffes in bestimmten Bereichen von selbst ausbilden können.
Gemäß einem weiteren Ausführungsbeispiel der vorliegenden Erfindung weist ein an das Bauteil angrenzender Abschnitt der Beschichtung ein glaskeramisches Netzwerk auf. Ein glaskeramisches Netzwerk kann die Eigenschaft haben, unter anderem durch seine Polarität, sich in einer Art fester chemischer Bindung an eine Oberfläche eines Bauteils anzuhaften, so dass eine hohe mechanische Stabilität bzw. eine gute Abrasionsfestigkeit erreicht werden kann. Dabei kann das glaskeramische Netzwerk aus Siliziumoxid-Netzwerken, bzw. polaren Siliziumoxid-Netzwerken bestehen.

In einer weiteren Ausführungsform können in diesen glaskeramischen Netzwerken Nanopartikel eingebettet werden, welche die mechanische Stabilität und die Abrasionsfestigkeit deutlich erhöhen.

In einem weiteren exemplarischen Ausführungsbeispiel der vorliegenden Erfindung weist die Beschichtung ein Material mit eine niederenergetischen Oberfläche auf. Wie bereits erwähnt, benötigt man, um eine Unbenetzbarkeit und um eine schmutzabweisende Wirkung an Oberflächen zu schaffen, einen möglichst großer Kontaktwinkel von Flüssigkeiten bzw. Verschmutzungen mit der Oberfläche. Die optimale Form der Flüssigkeitstropfen auf der Oberfläche ist dabei die Kugelform. Der Kontaktwinkel wäre dann bei 180° Grad. Um dies zu erreichen, muss die Oberfläche äußerst niederenergetisch ausgebildet sein, um Wechselwirkungen zwischen der Flüssigkeit, bzw. der Verschmutzung, und der Oberfläche zu minimieren. Nur dann kann es zu der gewünschten angenäherten Tropfenform und einer guten Ablösung von Verschmutzungen kommen. Die Oberflächenspannung des eingesetzten Materials kann dabei weniger als 40 mN/m, vorzugsweise weniger als 30 mN/m oder weiter vorzugsweise weniger als 20 mN/m. Beispielsweise kann die Oberfläche aus Fluorkohlenstoff-Verbindungen bestehen, die einen äußerst niederenergetischen Charakter aufweisen.

In einem weiteren Ausführungsbeispiel der Erfindung weist die Oberfläche einen großen Kontaktwinkel zu Wasser auf. Dies hat den Vorteil, dass Wasser leicht abperlt und somit die Oberfläche selbstreinigend ausgebildet werden kann. Unter dem Begriff "großer" Kontaktwinkel wird insbesondere ein Winkel zu Wasser von mindestens 80° Grad verstanden. Dies bedeutet, der Kontaktwinkel kann mindestens 80° Grad zu Wasser aufweisen, sollte jedoch in einem Bereich von 80° und 160° Grad liegen. Bevorzugt wird ein Kontaktwinkel von 90° - 120° Grad zu Wasser ausgebildet. Bei Winkeln um ca. 90° handelt es sich um hydrophobe und bei noch größeren Winkeln um superhydrophobe Oberflächen.

Die erfindungsgemäße glatte Oberfläche unterscheidet sich von der, durch ihre Mikrostruktur bedingte, definiert raue Oberfläche des Lotuseffekts. Der Ra-Wert wird dabei als maßstäbliche Einheit verwendet, um den Begriff "glatt" bzw. "mikroglatt", wie er hier Verwendung findet, zu definieren. Unter "glatt" kann erfindungsgemäß insbesondere ein Ra-Wert von Ra ≤ 1,2 µm definiert werden.

In einer weiteren exemplarischen Ausführungsform der Erfindung weist die Beschichtung der Oberfläche eine Rauhigkeit von weniger als Ra = 0,1 µm auf.

Solche Oberflächenbeschichtungen wie der vorliegenden Erfindung können vor allen Dingen bei Bauteilen eingesetzt werden, die großen Verschmutzungen ausgesetzt sind. Vor allen die Oberfläche von Messgeräten, insbesondere von medienberührenden Teilen von Messgeräten, sollten dauerhaft antiadhäsiv ausgestattet werden. Dazu gehören Bauteile wie Einrichtungen zum Senden und/oder Empfangen von elektromagnetischen Wellen oder von Schallwellen, Anpasskegel, Trichter, Reflektionsflächen, Stabantennen, piezoelektronische Schallgeber, Seilen und Kabeln, Stäben, Schwingstäben und Schwinggabeln und Einrichtungen zur Erfassung von Drücken.

In einem weiteren exemplarischen Ausführungsbeispiel des Verfahrens weist dieses den Schritt des Aufbringens einer Beschichtung aus einem Gradientenmaterial auf der Oberfläche des Bauteils auf.

In einem weiteren exemplarischen Ausführungsbeispiel des Verfahrens weist dieses ferner den Schritt des Bildens einer Beschichtung mit einer selbstorganisierenden Oberfläche auf.

In einem weiteren exemplarischen Ausführungsbeispiel des Verfahrens weist dieses den Schritt des Bildens einer Beschichtung auf, die an einem an das Bauteil angrenzenden Abschnitt ein glaskeramisches Netzwerk aufweist.

In einem weiteren exemplarischen Ausführungsbeispiel des Verfahrens weist dieses ferner den Schritt des Einbettens von Nanopartikeln in das glaskeramische Netzwerk auf.

In einem weiteren exemplarischen Herstellungsverfahren der vorliegenden Erfindung weist dieses den Schritt des Bildens einer Beschichtung auf, die eine niederenergetische Oberfläche aufweist.

In einem weiteren exemplarischen Ausführungsbeispiel des Herstellungsverfahrens weist dieses ferner den Schritt des Aufbringens einer Beschichtung auf, die in Richtung der Umgebung einen großen Kontaktwinkel zu Wasser aufweist.

In einer weiteren exemplarischen Ausführungsform des Herstellungsverfahrens weist dieses den Schritt des Aufbringens einer Beschichtung auf der Oberfläche des Bauteils mittels eines Tauchverfahrens und/oder Sprühverfahrens auf. Somit können Bauteile einfach mit der gewünschten Beschichtung eingesprüht bzw. in ein Material für die Beschichtung enthaltendes Bad eingetaucht werden, sodass sich anschließend - nach einem optionalen Austrocknen - eine unbenetzbare und schmutzabweisende Oberflächenschicht ausbildet. Diese beiden Verfahren haben den Vorteil, dass selbst verwinkelte Stellen einfach und kostengünstig mit der gewünschten Beschichtung ausgebildet werden können.

Wählt man beispielsweise eine Beschichtung aus einem Gradientenmaterial mit beispielsweise einem selbstorganisierenden Charakter, besteht zusätzlich die Möglichkeit, nach dem Eintauchen oder Einsprühen der Bauteile eine Beschichtung zu erreichen, in der sich unterschiedliche Konzentration in verschiedenen Bereichen ausbildet. Dadurch kann beispielsweise eine an der Oberfläche stark niederenergetische Schicht gebildet werden, wobei an der zu dem Bauteil angrenzenden Schicht eine stark haftende und mechanisch stabile Schicht gebildet werden kann.

Vorteilhaft kann dabei das sogenannte Sol-Gel-Verfahren verwendet werden. Das Sol-Gel-Verfahren zum Bilden von Beschichtungen auf Materialien wie Stahl, Messing, Kupfer,

Aluminium, Glas und Kunststoffen (z.B. PA, PMMA, PC, ABS) ist als solches bekannt (siehe z.B. http://www.moeller-medical.com/de/nano.html). Ferner ist das Sol-Gel-Verfahren zum Herstellen dünner Schichten als solches in Georgi, U. et al. 1997, "Chemical Modification of Thin Silica Films via the Sol-Gel-Process", J.Sol-Gel-Sci. Technol. 8:507-509 offenbart.

In einem weiteren exemplarischen Ausführungsbeispiel des Verfahrens weist dieses den Schritt des Herstellens einer Oberfläche des Bauteils auf, das eine Rauhigkeit von weniger als Ra = 0,1 µm aufweist.

In einem weiteren exemplarischen Ausführungsbeispiel der Vorrichtung besteht diese aus einem Radarfüllstandsmessgerät.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnung näher beschrieben. Es zeigen:
Fig. 1 eine schematische Darstellung einer Oberflächenbeschichtung mittels Lotuseffekt;
Fig. 2 eine schematische Darstellung einer Oberflächenbeschichtung in der zwei verschiedene Schichten ausgebildet sind gemäß einem Ausführungsbeispiel der Erfindung.
Fig. 3 eine schematische Darstellung einer Oberflächenbeschichtung gemäß einem Ausführungsbeispiel der Erfindung.
Fig. 4 eine Hornantenne eines Radarfüllstandmessgerätes mit herkömmlicher Oberfläche.
Fig. 5 eine Hornantenne eines Radarfüllstandsmessgerätes mit selbstreinigender Oberfläche gemäß einem Ausführungsbeispiel der Erfindung.

### Detaillierte Beschreibung von exemplarischen Ausführungsformen

Gleiche oder ähnliche Komponenten in unterschiedlichen Figuren sind mit gleichen Bezugsziffern versehen.

Die Darstellung in den Figuren sind schematisch und nicht maßstäblich.

Fig. 2 zeigt eine erfindungsgemäße Ausführungsform der Erfindung. Ein Bauteil 2, beispielsweise eine Komponente für ein Füllstandmessgerät oder für ein Druckmessgerät, wird mit einer Beschichtung 1 dargestellt, auf der sich ein Flüssigkeitstropfen 5, bzw. eine Verschmutzung 5, befindet. Dadurch, dass die Oberfläche der Beschichtung 4 mikroglatt ausgebildet ist, kann die Ablagerung 5 an der Oberfläche ablaufen

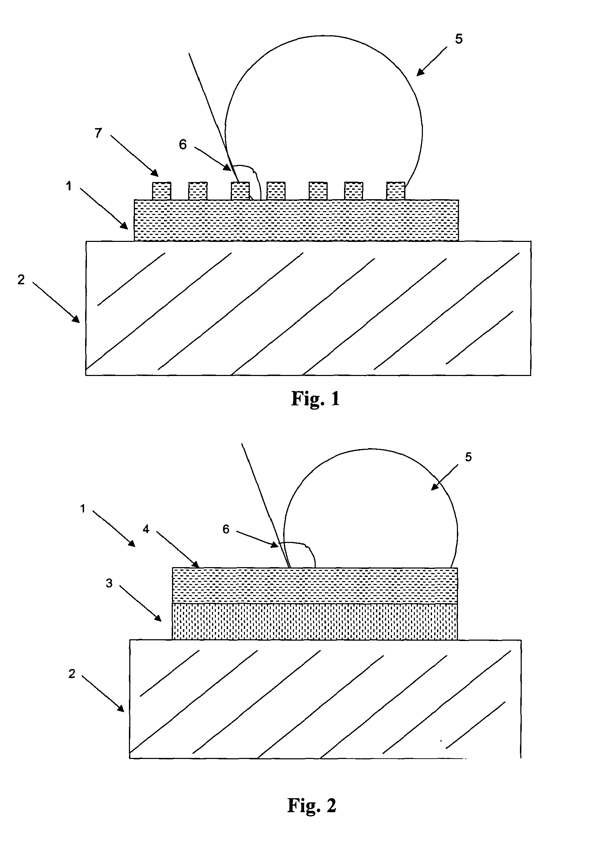

Fig 1. zeigt ein Bauteil 2, das mit einer Beschichtung 1 versehen ist, die unter Verwendung des Lotuseffekts antiadhäsive Eigenschaften aufweist. Die Beschichtung 1 ist dabei auf einem Bauteil 2 aufgebracht. An ihrer Oberfläche befindet sich eine Mikrostruktur 7, die Erhebungen und Vertiefungen aufweist. Diese Erhebungen und Vertiefungen sind dabei 5-200 µm hoch und 5-50 µm voneinander entfernt. Der Flüssigkeitstropfen 5 liegt auf der Oberfläche, die aus der Mikrostruktur 7 besteht, auf, so dass durch die kleine Kontaktfläche des Flüssigkeitstropfens 5 dieser leicht abperlen kann. Der Kontaktwinkel beträgt, wie beispielsweise in Fig. 1 dargestellt, 110° Grad.

Wird diese Mikrostruktur 7 durch mechanische oder chemische Einwirkung zerstört, verliert die Beschichtung 1 mit dem Lotuseffekt ihre Wirkung. Ein weiterer Nachteil wird in Fig. 1 deutlich, nämlich dass durch die Mikrostruktur 7 eine äußerst raue Oberflache entsteht, in der sich kleine Schmutzpartikel festsetzen, die nur mit viel Flüssigkeit weggewaschen werden können.

Fig. 2 zeigt ein erfindungsgemäßes Bauteil 2 mit einer Beschichtung 1. Die Beschichtung 1 wird dabei in zwei Bereiche 3, 4 unterschiedlicher Stoffkonzentrationen geteilt. An der dem Bauteil 2 zugewandten Seite 3 wird eine Schicht ausgebildet, die äußerst fest mit dem Bauteil 2 verbunden ist, um somit eine hohe Abrasionfestigkeit bzw. eine mechanisch stabile Schicht zu erreichen. An der Oberfläche der Beschichtung 1 bildet sich eine Schicht 4 mit Antiadhäsions-Eigenschaften aus. Dies bedeutet, dass sie aus einer dauerhaften Niedrigenergieoberfläche besteht, d.h. die wenig Wechselwirkungen mit Wasser eingeht, wodurch der Kontaktwinkel 6, wie beispielsweise in Fig. 2110° Grad, groß und das Abperlen von Flüssigkeiten erleichtert wird.

Zur Erläuterung ist in Fig. 2 ebenfalls ein Flüssigkeitstropfen 5 dargestellt, an dem der Kontaktwinkel 6 schematisch dargestellt wird. Es wird deutlich, dass der Kontaktwinkel 5 umso größer wird, je mehr sich die Flüssigkeit 5 zu einer Kugelform ausbildet und sich die Kontaktfläche zwischen Tropfen 5 und Beschichtung 1 bzw. 4 verkleinert, und Verschmutzungen 5 somit leicht abperlen können.

Damit sich die Flüssigkeit 5 einer Kugelform annähern kann, müssen sich die Wechselwirkungen zwischen der Beschichtung 1 und der Flüssigkeit 5 minimieren, so dass eine Niedrigenergieoberfläche geschaffen werden muss.

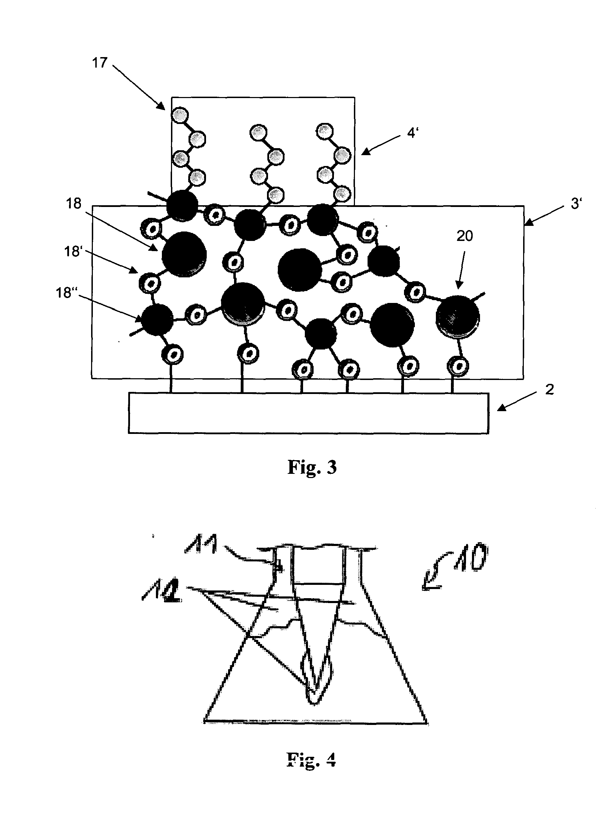

Fig. 3 zeigt ein exemplarisches Ausführungsbeispiel der vorliegenden Erfindung. In einer detaillierteren Ansicht werden die verschieden Molekularstrukturen dargestellt. An der dem Werkstück zugewandten Seite 3' können sich molekulare Verbindungen ausbilden, die die

Schicht 3 fest mit den Bauteil 2 verbinden, oder es werden Stoffe verwendet, die gegenseitig sehr starke Wechselwirkungen erzeugen. In Fig. 3 ist als Bauteil 2 zugewandte Seite 3' ein glaskeramisches, polares Si-O-Netzwerk 18, 18', 18" dargestellt, in dem Nanopartikel, wie beispielsweise MeO₂ 20 eingebettet sind. Es wird eine chemisch feste Bindung mit dem Bauteil 2 erzeugt.

An der Oberfläche der Beschichtung 1 bildet sich gemäß Fig. 3 eine Schicht 4 aus Fluor-Kohlenstoff 17 aus. Diese Schicht ist äußerst niederenergetisch und mikroglatt, bzw. mit einem niedrigen Ra-Wert, ausgebildet.

Es sei darauf hingewiesen, dass die beispielhaften Beschichtungen, die mehrere Konzentrationsbereiche verschiedener Stoffe ausbilden können, z.B. aufgrund ihres selbstorganisierenden Charakters, nicht streng in zwei Teile geteilt werden, sondern dass es sich um definierte Konzentrationsverschiebungen innerhalb einer Beschichtung 1 handeln kann.

Im Weiteren wird bezugnehmend auf Fig. 4 eine Hornantenne 10 eines Radarfüllstandmessgerätes ohne eine erfindungsgemäße Beschichtung beschrieben.

Die Hornantenne 10 eines solchen Füllstandsensors ragt im Einbauzustand in den Innenraum eines Behälters (z.B. eines Flüssigkeitstanks) vor. Ein von der Hornantenne 10 abgestrahlter Radar-Messpuls wird an der Oberfläche des Füllguts im Behälter reflektiert. Die Antenne 10 fängt den reflektierten Puls auf. Aus der gesamten Laufzeit des Pulses wird der Abstand der reflektierenden Fläche von der Antenne 10 bestimmt, der dem Füllstand entspricht.

Bei flüssigen Füllgütern kommt es durch den Kontakt der Antenne 10 mit Füllgutdampf zu oberflächigen Belägen und eventuell zur Kondensatbildung, z.B. in Spalten und anderen engen Hohlräumen in der Antennenstruktur. Auch partikuläre Füllgüter können, z.B. beim Befüllen des Behälters, an die Antenne 10 gelangen.

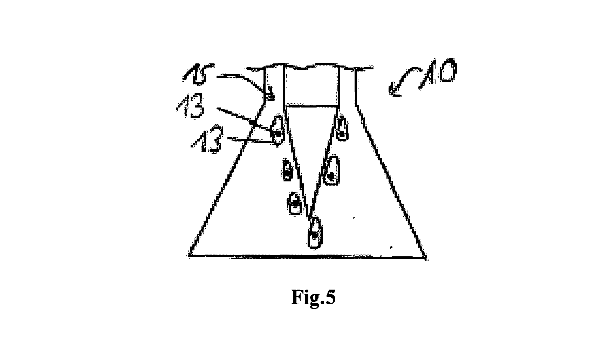

Während bei herkömmlichen Oberflächen 11 solches Kondensat 12 bzw. solche Partikel an der Antenne 11 anhaften und entsprechende Verzerrungen im ausgesendeten bzw. empfangenen Radarsignal bewirken, laufen, wie in Fig. 5 gezeigt, bei erfindungsgemäßen Sensoren mit mikroglatter Oberfläche 15 Kondensatanteile 13 leicht von der Antenne 10 ab ; anhaftende Schmutzpartikel werden von Kondensattropfen 13 während des Betriebes des Gerätes aufgenommen und von dessen Oberfläche abgeführt. Die dadurch bewirkte permanente Selbstreinigung des Sensors verhindert die dauerhafte Anhaftung von Schmutz an dessen Oberfläche und sorgt so für eine gleichbleibende, verzerrungsfreie Messgenauigkeit und Funktionssicherheit.

Da Sensoren der genannten Art oftmals auch in Außenanlagen eingesetzt werden, die den üblichen Witterungsbedingungen ausgesetzt sind, ist es erfindungsgemäß bevorzugt, auch solche Teile bzw. Bauteile der Sensoren mit mikroglatter Oberfläche auszustatten, die nicht direkt mit dem zu messenden Medium in Kontakt kommen. So ist es sinnvoll und erfindungsgemäß bevorzugt, insbesondere auch Gehäuseteile und Messwerte bzw. Parameteranzeigen, die der Witterung ausgesetzt sind, mit selbstreinigender Oberfläche auszustatten. Die entsprechenden Gehäuse bzw. Messwertanzeigenteile erfindungsgemäßer Sensoren werden dementsprechend durch die Einwirkung von Regen regelmäßig von anhaftendem Schmutz bzw. Staub befreit, wodurch sowohl ein sauberes äußeres Erscheinungsbild wie auch die Ablesbarkeit von Anzeigen dauerhaft auch ohne besonderen Reinigungsaufwand erhalten bleibt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Bauteil (2) für ein Füllstandmessgerät oder für ein Druckmessgerät, wobei das Bauteil (2) eine Beschichtung (1) mit einer mikroglatten Oberfläche (4) aufweist, so dass die mikroglatte Oberfläche (4) von Ablagerungen im Wesentlichen frei bleibt.

2. Bauteil (2) nach Anspruch 1, wobei die Beschichtung (1) aus einem Gradientenmaterial gebildet ist.

3. Bauteil (2) nach Anspruch 1 oder 2, wobei die Beschichtung eine mittels Selbstorganisation gebildete Oberflächenschicht (4) aufweist.

4. Bauteil (2) nach einem der Ansprüche 1 bis 3, wobei ein an das Bauteil (2) angrenzender Abschnitt der Beschichtung (1) ein glaskeramisches Netzwerk (3) aufweist.

5. Bauteil (2) nach Anspruch 4, wobei das glaskeramische Netzwerk (3) eine Siliziumoxid-Verbindung aufweist.

6. Bauteil (2) nach Anspruch 4 oder 5, wobei in dem glaskeramischen Netzwerk (3) Nanopartikel eingebettet sind.

7. Bauteil (2) nach einem der Ansprüche 1 bis 6, wobei ein Oberflächenbereich (4) der Beschichtung (1) ein Material mit einer niedrigen Oberflächenspannung, insbesondere weniger als 40 mN/m, aufweist.

8. Bauteil (2) nach Anspruch 7, wobei das Material mit einer niedrigen Oberflächenenergie Fluor-Kohlenstoff-Verbindungen aufweist.

9. Bauteil (2) nach Anspruch 7 oder 8, wobei der Oberflächenbereich (4) einen großen Kontaktwinkel (6) zu Wasser aufweist.

10. Bauteil (2) nach Anspruch 9, wobei der Oberflächenbereich (4) einen Kontaktwinkel (6) zu Wasser von mindestens 80° Grad, insbesondere von zwischen 90° und 120°, aufweist.

11. Bauteil (2) nach einem der vorangegangenen Ansprüche, wobei die mikroglatte Oberfläche (4) der Beschichtung (1) eine Rauhigkeit von weniger als Ra = 1 µm, insbesondere von weniger als Ra = 0.1 µm, aufweist.

12. Bauteil nach einem der vorangegangenen Ansprüche, ausgebildet als eines aus der Gruppe bestehend aus einer Einrichtung zum Senden und/oder Empfangen von elektromagnetischen Wellen oder von Schallwellen, einem Anpasskegel, einem Trichter, einer Reflexionsfläche, einer Stabantenne, einem piezoelektronischen Schallgeber, einem Seil, einem Kabel, einem Stab, einem Schwingstab, einer Schwinggabel, einem Sensor und einer Einrichtung zur Erfassung von Drücken.

13. Verfahren zur Herstellung eines Bauteils für ein Füllstandmessgerät oder für ein Druckmessgerät, wobei das Verfahren den folgenden Schritt aufweist:
- Bilden einer Beschichtung (1) mit einer mikroglatten Oberfläche auf dem Bauteil (2), so dass die mikroglatte Oberfläche (4) von Ablagerungen im Wesentlichen frei bleibt.

14. Herstellungsverfahren nach Anspruch 13, ferner aufweisend den Schritt des Aufbringens der Beschichtung (1) aus einem Gradientenmaterial auf die Oberfläche des Bauteils.

15. Herstellungsverfahren nach Anspruch 13 oder 14, ferner aufweisend den Schritt des Bildens der Beschichtung (1) mit einer selbstorganisierenden Oberfläche.

16. Herstellungsverfahren nach einem der Ansprüche 13 bis 15, ferner aufweisend den Schritt des Bildens der Beschichtung (1), die an einem an das Bauteil (2) angrenzenden Abschnitt ein glaskeramisches Netzwerk (3') aufweist.

17. Herstellungsverfahren nach Anspruch 16, ferner aufweisend den Schritt des Einbettens von Nanopartikeln in das glaskeramisches Netzwerk (3').

18. Herstellungsverfahren nach einem der Ansprüche 13 bis 17 ferner aufweisend den Schritt des Bildens der Beschichtung (1) mit einer niederenergetischen Oberfläche.

19. Herstellungsverfahren nach einem der Ansprüche 13 bis 18, ferner aufweisend den Schritt des Aufbringens der Beschichtung (1), die in Richtung der Umgebung einen großen Kontaktwinkel (6) zu Wasser aufweist.

20. Herstellungsverfahren nach einem der Ansprüche 13 bis 19, ferner aufweisend den Schritt des Aufbringens der Beschichtung (1) auf der Oberfläche des Bauteils (2) mittels eines Tauchverfahrens und/oder mittels eines Sprühverfahrens.

21. Herstellungsverfahren nach einem der Ansprüche 13 bis 20, ferner aufweisend den Schritt des Aufbringens der Beschichtung (1) mittels eines Sol-Gel-Verfahrens.

22. Herstellungsverfahren nach einem der Ansprüche 13 bis 21, ferner aufweisend den Schritt des Herstellens der Oberfläche des Bauteils (2) mit einer Rauhigkeit weniger als Ra = 1 µm, insbesondere von weniger als Ra = 0.1 µm.

23. Vorrichtung zum Füllstandsmessen oder Druckmessen, umfassend:
- mindestens ein Bauteil nach einem der Ansprüche 1 bis -12.

24. Vorrichtung nach Anspruch 22, eingerichtet als Radar-Füllstandmessgerät.

25. Verwendung eines Bauteils (2) gemäß einem der Ansprüche 1 bis 12 in einem Füllstandmessgerät oder in einem Druckmessgerät.
